**Europäisches Patentamt**

**European Patent Office**

**Office européen des brevets**

(19)

(11) Veröffentlichungsnummer : **0 052 689**
**B1**

(12)

# EUROPÄISCHE PATENTSCHRIFT

(45) Veröffentlichungstag der Patentschrift :
25.07.84

(21) Anmeldenummer : **80710027.6**

(22) Anmeldetag : **26.11.80**

(51) Int. Cl.³ : **F 16 J 15/16**

(54) **Stangen- oder Kolbendichtung.**

(43) Veröffentlichungstag der Anmeldung :
**02.06.82 Patentblatt 82/22**

(45) Bekanntmachung des Hinweises auf die Patenterteilung : **25.07.84 Patentblatt 84/30**

(84) Benannte Vertragsstaaten :
**BE DE FR GB IT NL SE**

(56) Entgegenhaltungen :
**DE-B-    4 784
DE-U- 1 918 508
DE-U- 1 985 464
FR-A- 1 372 287
GB-A-    923 013
GB-A-    929 528
US-A- 3 131 611
US-A- 3 455 564
C. FREUDENBERG "SIMRIT-Katalog Nr. 410" April
1973, Weinheim "Dichtelemente, Formteile" Seite 32**

(73) Patentinhaber : **Firma Carl Freudenberg
Höhnerweg 2
D-6940 Weinheim/Bergstrasse (DE)**

(72) Erfinder : **Blesing, Dieter
Im Klingen 9
D-6149 Fürth 4 (DE)**

(74) Vertreter : **Weissenfeld-Richters, Helga, Dr.
Höhnerweg 2
D-6940 Weinheim/Bergstrasse (DE)**

Jouve, 18, rue St-Denis, 75001 Paris, France

## Beschreibung

Die Erfindung bezieht sich auf eine Stangen- oder Kolbendichtung, bestehend aus einem Dichtring aus einem gummielastischen Werkstoff, der mit wenigstens einer ersten Dichtlippe gleitend an dem relativ beweglichen Maschinenteil anliegt, mit wenigstens einer zweiten Dichtlippe ruhend an dem relativ unbeweglichen Maschinenteil und mit einer sich in radialer Richtung erstreckenden Begrenzungsfläche auf der von dem abgedichteten Medium abgewandten Seite an einem spaltverschließenden Stützring, der aus einem zähen und harten Werkstoff besteht und in einer Nut des Dichtringes gelagert ist, wobei der zwischen dem Stützring und dem relativ unbeweglichen Maschinenteil verbleibende Teil des Profils des Dichtringes an einer sich in radialer Richtung erstreckenden Fläche des relativ unbeweglichen Maschinenteils anliegt und wobei das Verhältnis aus dem Durchmesser des Profils des Stützringes und der radialen Breite des Dichtringes auf der druckabgewandten Seite 0,2 bis 0,6 beträgt.

Eine Dichtung der vorstehend angesprochenen Art wird in DE-U-1 918 508 beschrieben. Dicht- und Führungsring berühren einander dabei scharfkantig an der relativ bewegten Fläche. Neben einem starken Verschleiß, der zu vorzeitigem Ausfall der Dichtung führen kann, wird insbesondere die große Neigung zum Verklemmen der relativ beweglichen Stange bzw. des Kolbens beanstandet.

Eine ähnliche Stangendichtung wird in dem SIMRIT-Katalog Nr. 410, auf Seite 33, der Firma Carl Freudenberg in 6940 Weinheim, Bundesrepublik Deutschland, beschrieben. Der Dichtring ist als Nutring ausgebildet, und sein Profil weist auf der von dem abgedichteten Medium abgewandten und der relativ beweglichen Stange zugewandten Seite eine winkelförmige Aussparung auf, in der ein an das Profil angepaßter Stützring gelagert ist. Dieser hat ein rechteckiges bzw. ein quadratisches Profil, und er soll verhindern, daß bei einer axialen Bewegung der Dichtung Teile des elastisch nachgiebigen Nutringes in den abgedichteten Spalt ausgetrieben und dabei zerstört werden. Der Stützring muß dementsprechend unmittelbar auf der Oberfläche der abgedichteten Stange aufliegen. Zur Erzielung der diesbezüglich benötigten Präzision ist bei großen Durchmessern eine Herstellung durch Herausschneiden aus einem vollen Körper üblich.

Diese Herstellungsmethode ist aufwendig und teuer. Auch bei dieser Ausführung ist der Stützring an der abgedichteten Stange scharfkantig gegenüber dem Nutring begrenzt und wird unter Betriebsbedingungen durch das abgedichtete Medium in radialer Richtung nach innen gegen die Oberfläche der abgedichteten Stange gepreßt.

Der Erfindung liegt die Aufgabe zugrunde, diese Nachteile zu überwinden und eine Dichtung für einen Kolben oder eine Stange zu entwickeln, die bei Verwendung üblicher Dichtungswerkstoffe das Auftreten einer Spaltextrusion bis zu einem Betriebsdruck von wenigstens 500 bar sicher verhindert, vorzugsweise bis zu einem Betriebsdruck von mehr als 1 000 bar.

Diese Aufgabe wird erfindungsgemäß mit den Mitteln gelöst, wie in der Anspruchsfassung gekennzeichnet.

Die durch die Erfindung erzielten Vorteile bestehen neben einer Vereinfachung der Herstellbarkeit in einem wesentlich verbesserten Betriebsverhalten. Es können Betriebsdrücke von mehr als 1 000 bar abgedichtet werden, ohne daß Spaltextrusionen zu befürchten sind. Die Stangen- oder Kolbendichtung hat eine wesentlich vergrößerte Gebrauchsdauer. Die Beweglichkeit der relativ beweglichen Stange bzw. des Kolbens bleibt unverändert über die gesamte Gebrauchsdauer der Dichtung erhalten.

Die Erfindung wird nachfolgend anhand der in der Anlage beigefügten Zeichnung beispielhaft erläutert.

Es zeigen :

Figur 1 eine einseitig wirksame Stangendichtung.

Figur 2 zwei einseitig wirksame Kolbendichtungen, die auf einem Kolben in einer spiegelbildlichen Anordnung zu einer Einheit zusammengefaßt sind.

Figur 3 eine Kolbendichtung in uneingebautem Zustand.

Sämtliche dargestellten Teile sind rotationssymmetrisch ausgebildet. Die Figuren geben diese in halbgeschnittener Darstellung wieder.

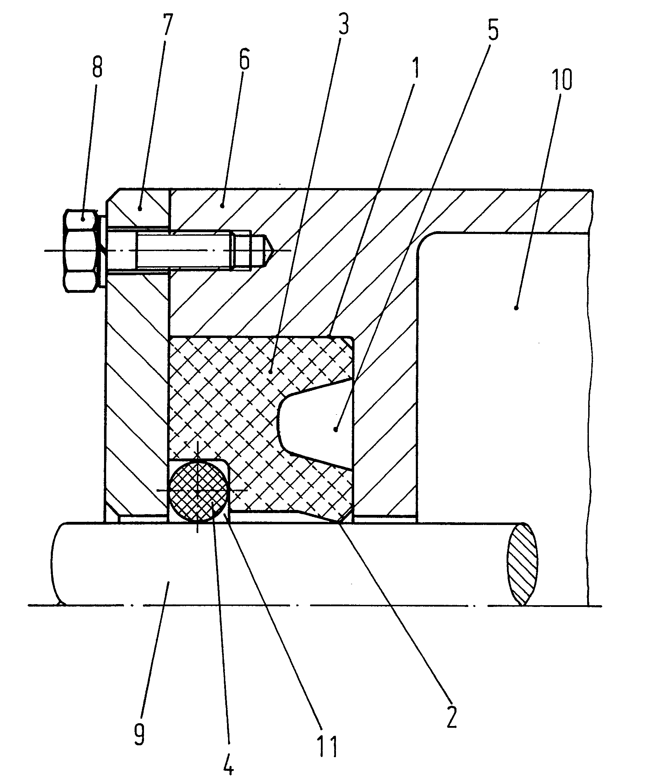

Die Stangendichtung gemäß Figur 1 ist in eine ringförmige Nut 5 eines Zylinders 6 eingesetzt, und wird in dieser durch die beidseitig angeordneten Stirnwände an einer axialen Verschiebung gehindert. Die den Zylinder nach außen abschließende Stirnwand wird durch einen Deckel 7 gebildet, der durch gleichmäßig auf dem Umfang verteilte Schrauben 8 mit dem Zylinder verbunden ist. Der axiale Abstand zwischen den Stirnwänden ist geringfügig größer als die axiale Länge des Dichtringes 3. Der Druck des abgedichteten Mediums wird deshalb unmittelbar auf diesen übertragen und bewirkt eine Anpressung der statisch wirkenden Dichtlippe 1 gegen den Innenumfang der Nut und eine Anpressung der dynamisch wirkenden Dichtlippe 2 gegen die Oberfläche der abgedichteten Stange 9.

Der Dichtring 3 weist auf der druckabgewandten Seite eine in Richtung der Stange geöffnete Nut mit einem winkelförmigen Profil auf.

Die beiden Begrenzungsflächen der Nut umgeben die abgedichtete Stange 9 als radial und als axial verlaufende Flächen. Sie gehen durch eine Ausrundung ineinander über, deren Radius maximal dem halben Durchmesser des in der Nut gelagerten Stützringes 4 entsprechen darf.

Der Stützring hat in jedem Falle ein kreisförmig begrenztes Profil, und seine Oberfläche springt radial innerhalb der sich vor Druckbeaufschlagung ergebenden Berührungslinie mit dem Dichtring in Richtung der druckabgewandten Seite zurück. Zwischen dem Dichtring, dem Stützring und der Stange bildet sich dadurch ein Freiraum 11, in den deformierende Bestandteile des Dichtringes 3 bei höheren Druckbelastungen elastisch ausweichen können. Ein Verklemmen derartiger Bestandteile zwischen dem Stützring und der abgedichteten Stange 9 und die daraus resultierenden Zerstörungen sind nicht mehr zu befürchten.

Es ist von wesentlicher Bedeutung, daß das Profil des Stützringes kreisförmig ist, und daß das Profil unter Betriebsbedingungen keinerlei Veränderungen erfährt. Die für seine Herstellung in Frage kommenden Werkstoffe müssen sich deshalb durch eine gewisse Mindestdeformationsfestigkeit auszeichnen, wobei es von besonderem Vorteil ist, wenn der Reibungskoeffizient gegenüber der abgedichteten Stange 9 niedrige Werte annimmt. Von den thermoplastischen Werkstoffen sind gut geeignet gefülltes Polytetrafluorethylen, Polyoxylmethylen, Polyamid, Polyethylen, Polypropylen und Polyphenylenoxid.

Es können auch duroplastische Werkstoffe verwendet werden, wobei eine größere Temperaturbeständigkeit und eine bessere Deformationsbeständigkeit erhalten wird.

Gut geeignet sind aus dieser Werkstoffgruppe Phenolharze, Melaminharze, ungesättigte Polyesterharze und Siliconharze. Eine noch größere Temperatur- und Deformationsbeständigkeit weisen metallische Werkstoffe auf, wobei wegen des erwünschten niedrigen Reibungskoeffizienten gegenüber Stahl Kupfer, Messing und Bronze bevorzugt werden.

Der Stützring kann in einem üblichen, zweiteiligen Spritzgießwerkzeug hergestellt werden, wobei es jedoch Schwierigkeiten bereiten kann, das erforderliche, absolut runde Profil praktisch zu realisieren. Für seine Herstellung wird erfindungsgemäß demgegenüber ein Strangpress- oder ein Extrusionsverfahren bevorzugt, bei dem der verwendete Werkstoff durch eine einfach herzustellende, kreisförmige Düse zu einem Stab ausgepreßt und anschließend zu einem Ring der gewünschten Größe umgeformt wird. Um auch nach bereits eingetretenem Verschleiß eine gleichbleibende Anpressung unter Betriebsbedingungen gegen die abgedichtete Stange zu gewährleisten ist es vorteilhaft, die Enden des Ringes nicht untereinander zu verbinden, sondern ihnen in Umfangsrichtung einen Abstand voneinander zu geben. Die beidseitigen Stirnflächen verlaufen parallel zueinander. Sie können sich parallel zur Achse der abgedichteten Stange 9 erstrecken, jedoch auch unter einem Winkel zu dieser.

Der Dichtring kann aus den üblichen gummielastischen Werkstoffen mit einer Shore-Härte A von 80 bis 94 bestehen. Die Auswahl ergibt sich im einzelnen aus den gestellten technischen Anforderungen, insbesondere aus der Temperaturbelastung, der Druckbelastung und der vorgesehenen Lebenserwartung.

Gut geeignet sind Kautschuke auf Basis von Acrylnitrilbutadien, Fluor, Ethylenpropylenterpolymer, Styrolbutadien, Acrylat und Chlorbutadien. Wegen ihrer guten Abriebbeständigkeit werden häufig Werkstoffe auf Basis elastomerer Polyurethane eingesetzt.

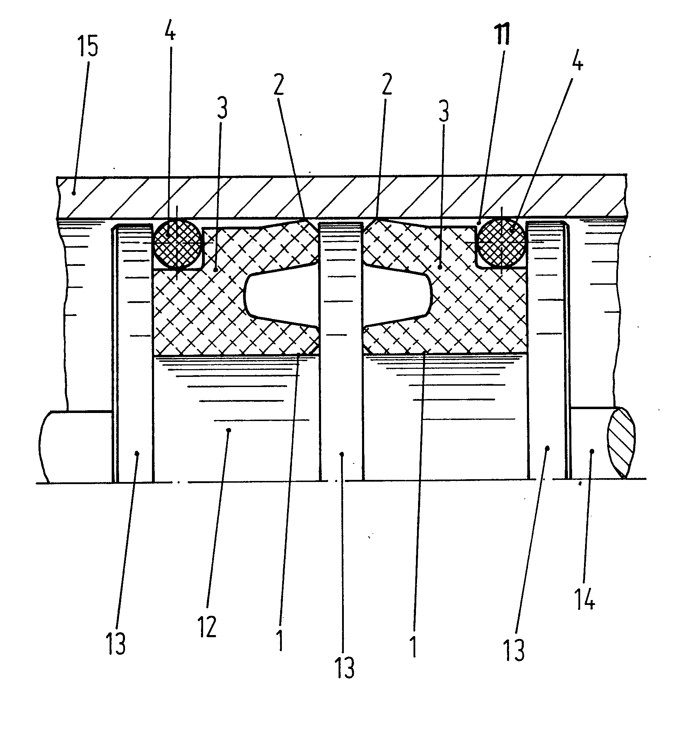

Figur 2 zeigt eine Anwendung der erfindungsgemäßen Dichtung in bezug auf die Abdichtung eines doppelseitig wirksamen Kolbens 12 gegenüber einem Zylinder 15. Der Kolben ist unverrückbar mit einer Kolbenstange 14 verbunden, und er enthält zwischen drei in einem axialen Abstand voneinander angeordneten Stirnplatten 13 ringförmig umlaufende Nuten. In den Nuten sind in spiegelbildlicher Anordnung zwei Dichtringe 3 gelagert, deren dynamisch wirkende Dichtlippen 2 an der Zylinderwand anliegen, und deren statisch wirkende Dichtlippen 1 auf dem Außenumfang des Kolbens aufliegen. Der Abstand zwischen den Stirnwänden ist auch in diesem Falle geringfügig größer als die axiale Länge des Dichtringes 3. Auf der druckabgewandten Seite weisen die Dichtringe jeweils eine umlaufende Nut mit einem winkelförmigen Profil auf, in der jeweils ein Stützring 4 mit einem kreisförmigen Profil gelagert ist. Die die Nut in axialer und in radialer Richtung begrenzenden Flächen liegen tangential auf dem Außenumfang des Stützringes auf. Der jeweils in dem Innenraum zwischen den Dichtlippen wirksame Druck des abgedichteten Mediums bewirkt eine Erhöhung der Anpreßkraft des Stützringes gegenüber der Zylinderwand. Deformationen des Dichtringes 3 werden in dem Freiraum 11 unschädlich aufgefangen, d. h. unter Vermeidung einer Spaltextrusion. Bei einer Ausführung, bei der der Durchmesser des Stützringes 40 % von der Breite des Dichtringes 3 überdeckt, werden daneben wesentliche Teile der Deformation vom Freiraum 11 aufgenommen und damit von dem Spalt abgelenkt.

Es wird angenommen, daß das ausgezeichnete Betriebsverhalten auch hierauf zurückzuführen sein kann.

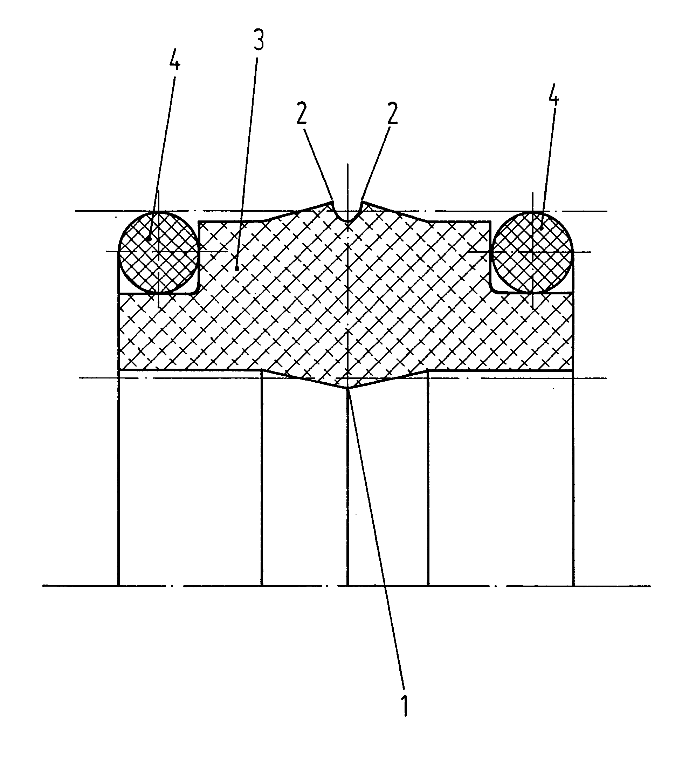

In Figur 3 ist ein doppelseitig wirksamer Dichtring zur Verwendung auf einem Kolben in einem Hydraulikzylinder wiedergegeben. Dieser weist auf der Innenseite zur statischen Abdichtung gegenüber dem Kolben eine einzige Dichtlippe 1 auf, auf der Außenseite für jede Beaufschlagungsrichtung eine selbständige, dynamisch wirkende Dichtlippe 2.

Der Dichtring weist auf beiden Stirnseiten eine umlaufende Nut mit einem winkelförmigen Profil auf, wobei die beiden die Nut bildenden Flächen parallel und senkrecht zur Achse des abgedichteten Zylinders angeordnet sind. Die beiden Flächen gehen mit einer Rundung ineinander über.

In der Nut ist jeweils ein Stützring 4 angeordnet, dessen Durchmesser 50 % von der sich in radialer Richtung erstreckenden Stirnfläche überdeckt. Der Dichtring besteht aus einem elastomeren Werkstoff, und er kann infolgedessen durch sogenannte Einschnappmontage in einer ungeteilten Nut eines Kolbens verankert werden. Die Stützringe sind durch eine axiale Auftrennung in Umfangsrichtung dehnbar und auch sie können infolgedessen durch Einschnappmontage in die Nuten des bereits montierten Dichtringes eingesetzt werden.

Die in der Zeichnung wiedergegebenen Figuren 1 bis 3 beziehen sich auf Stangen- oder Kolbendichtungen, bei denen der Stützring eine sich parallel oder schräg zur Achse der Stange oder des Kolbens erstreckende Auftrennung aufweist.

Die die Auftrennung begrenzenden Stirnflächen verlaufen parallel zueinander, und sie weisen im eingebauten Zustand einen gegenseitigen Abstand auf. Der Durchmesser paßt sich dadurch federelastisch den im Einzelfalle vorliegenden besonderen Gegebenheiten an.

Der Stützring ist in einer umlaufenden Nut des Dichtringes gelagert, die in Richtung der druckabgewandten Seite und des relativ bewegten Maschinenteiles geöffnet ist. Die die Nut in radialer und in axialer Richtung begrenzenden Flächen liegen mit einer von dem Druck des abgedichteten Mediums abhängigen Kraft auf dem Stützring auf, wodurch dieser an das relativ bewegte Maschinenteil angepreßt wird. Unvermeidbar auftretender Verschleiß wird dadurch selbsttätig ausgeglichen.

Es ist selbstverständlich auch möglich, gegebenenfalls einen Stützring ohne eine derartige Auftrennung zu verwenden, und diesen gegebenenfalls in einer entsprechenden Nut des relativ unbeweglichen Maschinenteiles zu lagern. Durch eine solche Ausführung lassen sich noch größere Drücke von beispielsweise mehr als 1 100 bar abdichten. Die praktische Herstellung erfordert aber allergrößte Präzision, und ein selbsttätiger Ausgleich verschleißbedingter, maßlicher Änderungen findet nicht statt. Die praktische Anwendung einer solchen Ausführung dürfte dadurch dem besonderen Einzelfalle vorbehalten bleiben.

**Ansprüche**

1. Stangen- oder Kolbendichtung, bestehend aus einem Dichtring (3) aus einem gummielastischen Werkstoff, der mit wenigstens einer Dichtlippe (2) gleitend an dem relativ beweglichen Maschinenteil (9, 15) anliegt, mit wenigstens einer zweiten Dichtlippe (1) ruhend an dem relativ unbeweglichen Maschinenteil (6, 12) und mit einer Begrenzungsfläche auf der von dem abgedichteten Medium abgewandten Seite an einem spaltverschließenden Stützring (4), der aus einem zähen und harten Werkstoff besteht und in einer Nut des Dichtringes (3) gelagert ist, wobei der zwischen dem Stützring (4) und dem relativ unbeweglichen Maschinenteil (6, 12) verbleibende Teil des Profils des Dichtringes (3) an einer sich in radialer Richtung erstreckenden Fläche des relativ unbeweglichen Maschinenteils (6, 12) anliegt und wobei das Verhältnis aus dem Durchmesser des Profils des Stützringes und der radialen Breite des Dichtringes auf der druckabgewandten Seite 0,2 bis 0,6 beträgt, dadurch gekennzeichnet, daß der Stützring (4) ein kreisförmig begrenztes Profil aufweist, daß die Nut durch, radial und axial verlaufende Flächen begrenzt ist, daß der Stützring (4) an den Flächen anliegt und gemeinsam mit der sich in radialer Richtung erstreckenden Fläche und dem relativ beweglichen Maschinenteil (9, 15) einen Freiraum (11) umschließt.

2. Stangen- oder Kolbendichtung nach Anspruch 1, dadurch gekennzeichnet, daß der Stützring (4) eine sich parallel oder schräg zur Achse der Stange (9) oder des Kolbens (12) erstreckende Auftrennung aufweist, und daß die sich im Bereich der Auftrennung gegenüberliegenden Flächen parallel verlaufen und im eingebauten Zustand einen Abstand haben.

3. Stangen- oder Kolbendichtung nach Anspruch 2, dadurch gekennzeichnet, daß der Stützring durch Anwendung eines Strangpress- oder Extrusionsverfahrens hergestellt ist.

4. Stangen- oder Kolbendichtung nach Anspruch 1 bis 3, dadurch gekennzeichnet, daß der Stützring bei einem Dichtring mit doppelseitiger Wirksamkeit auf beiden Seiten vorgesehen ist.

**Claims**

1. A rod seal or piston seal, consisting of a sealing ring (3) made of an elastomeric material, which ring rests slidingly by way of at least one sealing lip (2) against a machine part (9, 15) capable of relative motion and rests statically by way of at least one second sealing lip (1) against a machine part (6, 12) incapable of relative motion, and which ring further rests by way of a boundary surface on the side facing away from the sealed-off medium against a gap-sealing supporting ring (4) of a tough and hard material which is carried in a groove of the sealing ring (3), the part of the profile of the sealing ring (3) which remains between the supporting ring (4) and the machine part (6, 12) incapable of relative motion resting against a radially-extending surface of the machine part (6, 12) incapable of relative motion, and the ratio of the diameter of the profile of the supporting ring to the radial width of the sealing ring on the side facing away from the pressure being from 0.2 to 0.6, characterised in that the supporting ring (4) has a profile of circular outline, that the groove is bounded by surfaces running in the radial and axial directions, and that the supporting ring (4) rests against the surfaces and defines a free space (11) conjointly with the surface extending in the radial direction and with the machine part (9, 15) capable of relative motion.

2. A rod seal or piston seal according to claim 1, characterised in that the supporting ring (4) has a division extending parallel to, or at an angle to, the axis of the rod (9) or of the piston (12) and that the surfaces facing one another in the zone of the division run parallel to one another and are at a distance from one another when the supporting ring is in the fitted state.

3. A rod seal or piston seal according to claim 2, characterised in that the supporting ring is manufactured by an extrusion process.

4. A rod seal or piston seal according to any of claims 1 to 3, characterised in that the supporting ring is provided on both sides of a sealing ring effective in either direction.

**Revendications**

1. Joint d'étanchéité pour tiges ou pistons, composé d'une bague d'étanchéité (3) en une matière possédant l'élasticité du caoutchouc qui est appuyée à glissement par au moins une lèvre d'étanchéité (2) contre l'élément de machine (9, 15) en mouvement relatif, au moins une deuxième lèvre d'étanchéité (1) qui est appuyée contre l'élément de machine (6, 12) sans mouvement relatif, et une surface limite sur le côté qui est à l'opposé du fluide étanché, contre une bague d'appui (4) fermant la fente, qui est faite d'une matière tenace et dure et est logée dans une gorge de la bague d'étanchéité (3), la partie du profil de la bague d'étanchéité (3) qui subsiste entre la bague d'appui (4) et l'élément de machine (6, 12) sans mouvement relatif étant appuyée contre une surface de l'élément de machine (6, 12) sans mouvement relatif qui s'étend dans une direction radiale, et le rapport entre le diamètre du profil de la bague d'appui et la largeur radiale de la bague d'étanchéité sur le côté qui est à l'opposé de la pression étant de 0,2 à 0,6, caractérisé en ce que la bague d'appui (4) présente un profil limité par un cercle, en ce que la gorge est limitée par des surfaces s'étendant radialement axialement, en ce que la bague d'appui (4) est appuyée contre ces surfaces et enferme un espace libre (11) en combinaison avec la surface qui s'étend dans la direction radiale et l'élément en mouvement relatif (9, 10).

2. Joint d'étanchéité pour tiges ou pistons selon la revendication 1, caractérisé en ce que la bague d'appui (4) présente une coupure qui s'étend parallèlement ou obliquement à l'axe de la tige (9) ou du piston (12) et en ce que les surfaces qui se font face dans la région de la coupure s'étendent parallèlement et sont espacées d'une certaine distance dans l'état monté.

3. Joint d'étanchéité pour tiges ou pistons selon la revendication 2, caractérisé en ce que la bague d'appui est fabriquée par application d'un procédé de filage à la presse ou d'extrusion.

4. Joint d'étanchéité pour tiges ou pistons selon les revendications 1 à 3, caractérisé en ce que, dans le cas d'une bague d'étanchéité à double effet, la bague d'appui est prévue des deux côtés.